# EUROPEAN PATENT SPECIFICATION

(11) **EP 4 342 836 B1**
(45) Date of publication and mention of the grant of the patent: **19.11.2025**
(21) Application number: 23197725.7
(22) Date of filing: 15.09.2023
(51) Int. Cl.: B66C 13/18, B66C 13/40, H01M 10/42, H02J 7/00

(54) **BATTERY DEVICE**
BATTERIEVORRICHTUNG
DISPOSITIF DE BATTERIE

(30) Priority: 15.09.2022 SE 2251067
(43) Date of publication of application: 27.03.2024
(73) Proprietor: Olsbergs Electronics AB, 186 42 Vallentuna (SE)
(72) Inventor: NÄSLUND, David, 186 42 Vallentuna (SE); VADFORS, Tomas, 186 42 Vallentuna (SE); STEEN, Jan-Erik, 186 42 Vallentuna (SE)
(74) Representative: Bergenstråhle & Partners AB

(56) References cited:
- CN-U- 213 894 957
- DE-A1- 102011 081 324
- US-B2- 10 495 880

## Description

### Technical field

The present invention relates generally to batteries and more particularly to a smart battery device for a controller for operating a crane.

### Background art

A portable controller is normally used for controlling the functions of a machine, such as a hydraulic mobile crane. Presently, these actuators are normally radio-controlled, enabling the operator of for example a lorry mobile crane to control and supervise the various operations of the crane from a desired distance and to move freely thereabout.

Besides functioning as a controller for a crane in operation, a controller can be used for other purposes, such as in a system simulating the operation of a crane for training purposes. Operating a mobile crane is very complex, requiring long time of practicing before the operator is skilled enough to perform these operations, and using a controller normally used for daily operation of a crane also for simulation purposes is both cost-efficient and gives a simulation close to real operation.

Another use for a controller normally used for controlling a crane is for demonstration purposes, i.e., the controller is used for displaying and explaining the different functions thereof.

A specific controller can be used by several different operators with their own preferences and authorizations. DE 10 2011 081324 A1 discloses the preambles of the claim 1 and claim 7.

### Summary of invention

An object of the present invention is to provide a controller for a crane in which the selection of functions can be done in a controlled and defined way.

The invention is based on the insight that a battery device used for such a controller can be designed to set up a function profile of the controller in a controlled and defined way.

According to a first aspect of the invention, there is provided a battery device comprising a housing attached to a controller for operating a crane , wherein the controller is to be powered by the battery device, a battery cell, and electronic circuitry connected to the battery cell and electrically connectable to the controller, wherein the electronic circuitry comprises a memory, wherein a function of the controller depends on the information in the memory, characterized in that the function of the controller is to operate in one of a plurality of operating modes, wherein the operating modes comprise any of the following: an operation mode for controlling the operation of a crane, a simulation mode for communicating with a simulation device for simulating a crane, and a demonstration mode for demonstration of the different functions of the controller for controlling a crane.

In a preferred embodiment, the memory comprises a read/write memory.

In a preferred embodiment, a processor is provided connected to the memory.

In a preferred embodiment, the memory is a serial memory.

In a preferred embodiment, the function of the controller relates to user data, preferably authorization levels and/or identification information.

According to a second aspect of the invention, a controller for controlling the operation of a crane is provided, the controller comprising: a control panel for the control of different functions of the crane, a processing means connected to the control panel and adapted to control the function of the controller, and a detachable battery device for powering the controller, the controller being characterized in that the battery device is a battery device according to the invention.

According to a third aspect of the invention, a method of operating a controller for controlling the operation of a crane by means of a controller powered by a battery device according to the invention is provided, the method comprising the following steps: storing, in a memory of the battery device, information on which a function of the controller depends, attaching the battery device to the controller in electrical connection thereto, and operating the controller with functions depending on the information stored in the memory of the battery device, characterized in that operating modes comprise any of the following: an operation mode for controlling the operation of the crane, a simulation mode for communicating with a simulation device for simulating a crane, and a demonstration mode for demonstration of the different functions of the controller for controlling a crane.

According to a fourth aspect of the invention, a computer program comprising computer program code is provided, the computer program code being adapted, if executed on a processor of the processing means of a controller according to the invention, to implement the method according to the invention.

According to a fifth aspect of the invention, a computer program product is provided comprising a computer readable storage medium, the computer readable storage medium having the computer program according to the invention.

### Brief description of drawings

The invention is now described, by way of example, with reference to the accompanying drawings, in which:
Fig. 1a schematically shows a perspective view from above of a controller used with a battery according to the present invention,
Fig. 1b shows the controller of Fig. 1a with the battery partly inserted into the controller,
Fig. 2 is a schematic view showing the communication between a controller and a mobile crane,
Fig. 3 is a schematic view showing the communication between a controller and a simulation device,
Fig. 4 shows a perspective view of a battery according to the invention to be used with a controller for operating a crane,
Fig. 5 is a block diagram showing the layout of a battery device according to the invention,
Fig. 6 is a schematic view showing the communication between a battery device according to the invention and a computer, and
Fig. 7 is a block diagram showing the layout of an alternative embodiment of a battery device according to the invention together with a controller.

### Description of embodiments

In the following, a detailed description of a battery device for powering a controller controlling the operation of a crane will be given with reference to the figures.

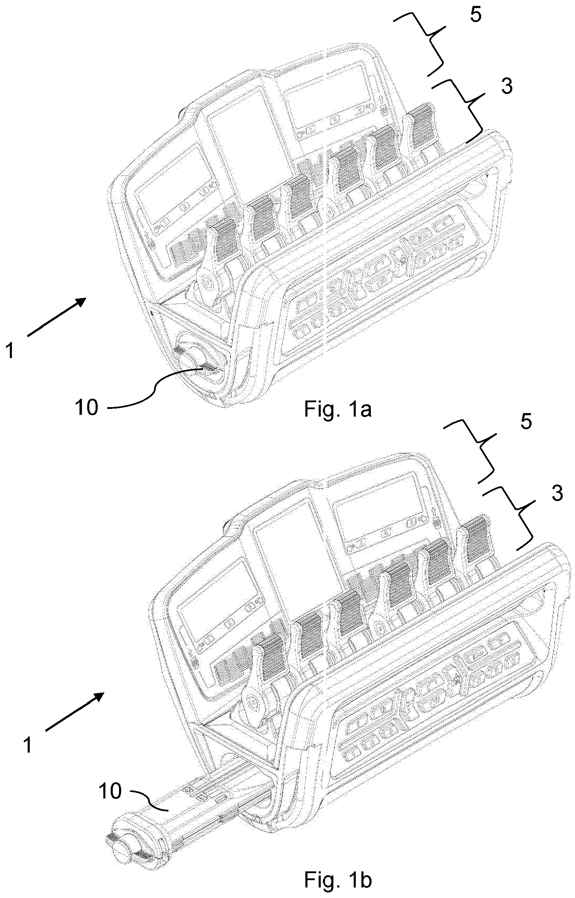

A portable controller, generally designated 1, for the control and supervision of functions of a remote device, such as a crane, particularly a mobile crane, is illustrated in Fig. 1. A controller according to this embodiment is adapted for two-way radio control. However, the crane may alternatively be remotely controlled via a cable or a wire.

According to the embodiment shown in Fig 1, the controller 1 comprises a control section 3 comprising six manual control members or levers. However, it will be appreciated that a controller according to the invention can have fewer or more than six control members. These control members are adapted for the control of the different functions of a crane. Thus, the control members are preferably designed as a row of levers, capable of forward and backward movement in one direction for the control of a function. Obviously, the control members may be of a different type or have a different design, such as joysticks. Each control member is electrically connected to a display panel, generally designated 5 for indicating a selected, active function. In the shown embodiment, three screens, preferably electro-optical screens, are electrically connected to the control members. Each of the control members is arranged to control one or more functions.

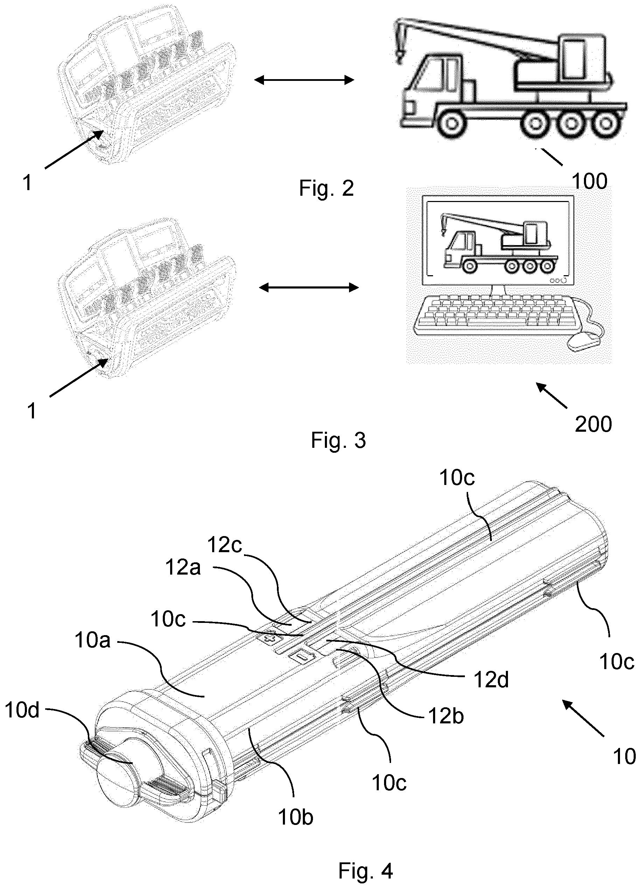

A battery device in the form of a detachable battery pack 10 is provided in the controller 1 for powering the different functions thereof. The battery pack 10 will be described in more detail below with reference to Figs. 4 - 6.

The communication between the controller 1 and a crane 100 in the form of a mobile crane is schematically shown in Fig. 2. The crane 100 is provided with a radio receiver (not shown) comprising a unit to handle traffic at the crane end. It is preferred that the communication is by radio frequency (RF) communication by means of a communication radio, but communication by means of wire with the crane 100 is also possible. By means of this communication, an operator can control the operation of the mobile crane 100 using the controller 1.

However, the controller 1 may find other applications than merely acting as a means for controlling the operation of a crane. For example, as illustrated in Fig. 3, the controller 1 may be used for controlling a simulation device 200, in the shown example a computer. In this function, the controller 1 functions as an input device during a simulation for learning purposes.

Turning now to Fig. 4, a perspective view of a battery pack 10 for use with the controller 1 is shown. In this embodiment, the battery pack 10 is generally elongated and with a shape adapted for insertion in a corresponding cavity in the controller 1, as is conventional. The envelop surface of the battery pack 10 has a shape to ensure that it can be inserted into the controller 10 in only one way. To this end, the envelop surface has two essentially planar surfaces 10a and two curved surfaces 10b with protrusions 10c adapted to be aligned with corresponding grooves in the walls of the cavity into which the battery pack 10 is inserted. The outer end portion of the battery pack is provided with a locking mechanism 10d for locking it in place when inserted in the controller 1.

The battery pack is provided with a contact portion 12 comprising two electrical contacts 12a, 12b for power and two contacts 12c, 12d for data, as will be explained below.

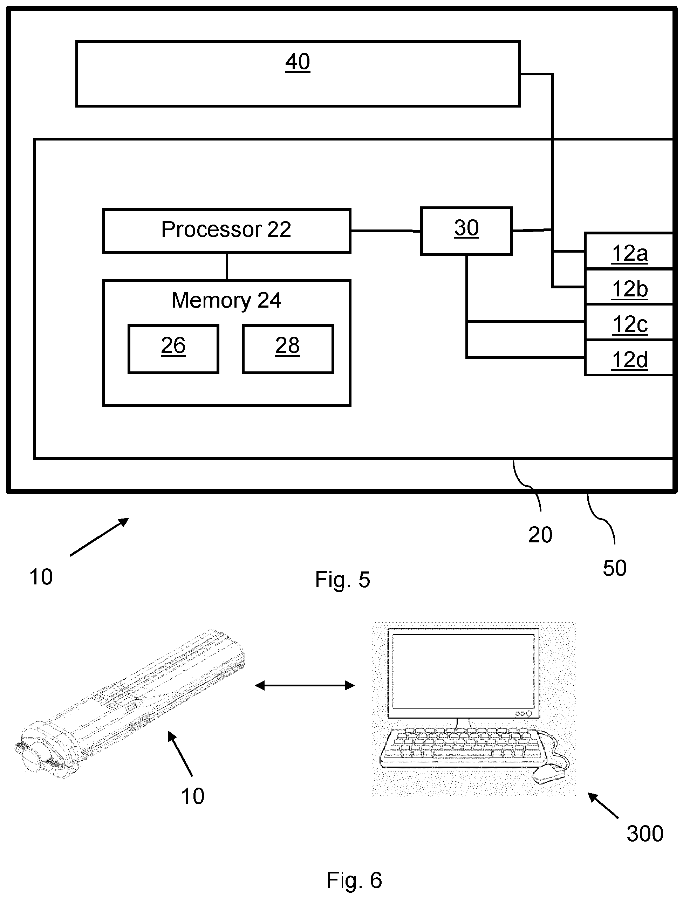

The battery pack 10 is schematically shown in Fig. 5 in the form of a block diagram. The battery pack 10 is configured to and operable to be used with a controller 1 as described with reference to Fig. 1 and comprises electronic circuitry in the form of a printed circuit board (PCB) 20 equipped with electronic circuits and other components connected to battery cells 40. In this context, the term battery cell should be interpreted to encompass any combination of battery cell(s) suitable for obtaining a desired operating voltage of the controller 10. In a preferred embodiment, the battery cells are NiMH or Li-Ion cells, but other suitable materials are also possible. The PCB 20 and the battery cells 40 are enclosed in a housing 50, preferably made of a plastic material, such as a PC/ABS combination.

The PCB 20 exhibits a processor 22 connected to a memory 24, either as two separate chips or integrated into a single one. In context of the present application the term processor 22 should be interpreted broadly as processing circuitry, which may comprise one or more programmable processor, application-specific integrated circuits, field programmable gate arrays or combinations of these adapted to execute instructions. The memory 24 contains instructions 26 executable by the processing circuitry, whereby the battery pack 10 is operative for different functions, such as communicating with the processor of the controller 10, monitoring the voltage and the temperature of the battery pack 20 etc. It is preferred that these instructions 26 are automatically updated to a latest version by the controller 1 when the battery pack 10 is attached thereto. The instructions may also be updated by means of an external computer device, as explained below. The memory 24 also contains a configuration area 28 in which user data is stored, the use of which will be explained in more detail below.

The PCB 20 also exhibits auxiliary components conventionally found in an electronic device, such as protection circuits for protecting the processor 22 from high voltages, voltage convertors for adapting the voltage for powering the processor 22, communication components as well as sensor components for measuring the voltage of the battery cells 40 and the temperature of the batter pack 10. These auxiliary components are collectively referred to as components 30.

The contact portion 12 is in the preferred embodiment provided on the PBC 20. The positive and negative contacts 12a and 12b are connected to the battery cells 40 as well as to the auxiliary components 30. The voltage used for powering the controller 10 is conventionally in the range of 6 - 18 Volts, preferably 6 - 9 Volts, most preferably 7.2 Volts. The data contacts 12c, 12d of the contact portion 12 are connected to the processor for communicating data between the battery pack 10 and the controller 1. The contact portion 12 is also used for communication with a configuration device, as explained below.

The configuration area 28 of the memory 24 is used for storing data relating to the use of the controller 1 in which the battery pack 10 is inserted. In other words, one or more functions of the controller 1 depend on the information in the memory 24. For example, the battery pack 10 may be used for making the controller 1 operate in one of a plurality of operating modes. These operating modes may relate to the function of the controller 1, for example an operation mode for controlling the operation of a crane 100, as shown in Fig. 2, a simulation mode for training purposes as shown in Fig. 3, or a demonstration mode for demonstration of the different functions of the controller 1. It is preferred that the operating mode associated with a battery pack 10 is indicated physically, such as by a colour coding of the housing of the battery pack 10.

Alternatively or additionally, the function controlled by the battery 10 may relate to user data, i.e., every operator/user has his/her own battery pack 10. This means that the functions of the controller 1 can be personalized to specific users. For example, different users can have different authorization levels, i.e., some users may use functions that others do not have access to. Alternatively or additionally, the maximum speed of controlled functions may be limited. In this case, it is preferred that identification information such as a password is stored in the configuration area 28 that must be entered before the controller 1 can be used.

By means of this configuration feature, it is possible to lock the controller 1 to one or more specific battery packs 10, thereby preventing unauthorized use of the controller. It is also possible to prevent unauthorized manufacturing of battery packs 10.

The memory 24 is preferably a read/write memory, i.e., it is possible to not only read data but also write data into the memory 24. This data can be written when the battery pack 10 is provided in the controller 1. Alternatively, the battery pack 10 is connected to a suitable interface of a programming unit, such as a computer 300, as schematically illustrated in Fig. 6. By means of suitable software, the battery pack 10 can be programmed for its chosen functions and user(s).

It is preferred that operation data, such as charging level of the battery cells 40, and functions used during operation, is stored in the memory 24. In this way, valuable information can be retrieved for subsequent analysis.

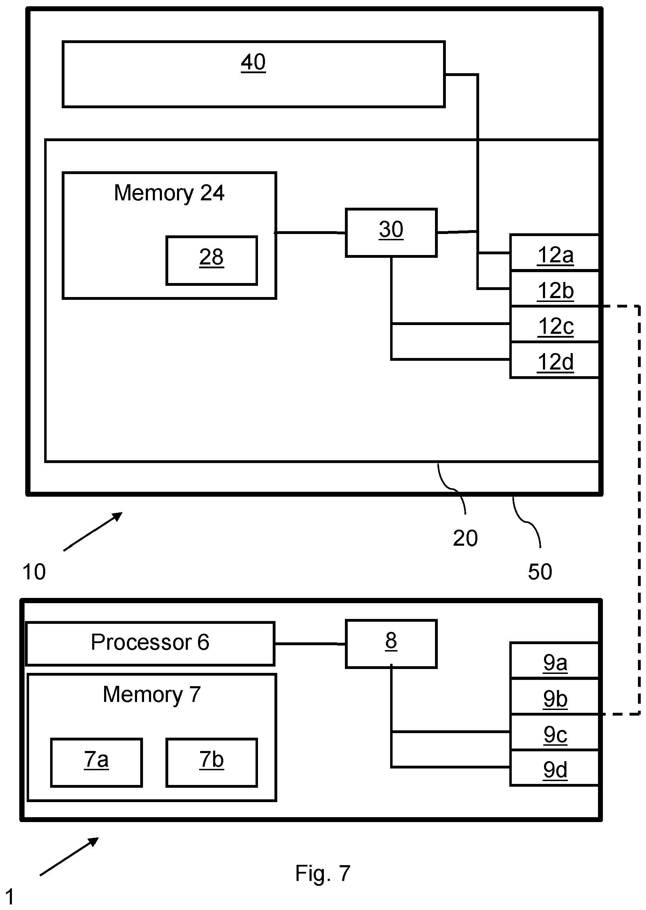

In an alternative embodiment of a battery pack 10, shown in Fig. 7, the processor has been omitted from the battery pack. Instead, all processing and execution of software are performed in the controller 1. To this end, the controller 1 is provided with a processor 6 connected to a memory 7, which contains instructions 7a executable by the processing circuitry and a memory area 7a for storing data. The processor is connected to auxiliary components 8 by means of which it can communicate with the memory 24 of the battery pack 10 via data contacts 9c, 9d in the controller 1 and the corresponding contacts 12c, 12d in the battery pack 10, as indicated by the dashed line in Fig. 7. In this embodiment, the memory 24 is preferably a serial memory.

This means that a method according to the invention of operating a controller 1 for controlling the operation of a crane by means of a controller 1 powered by a battery device 10 comprises the following steps: storing, in the memory 24 of the battery pack 10, information on which a function of the controller 1 depends, attaching the battery pack 10 to the controller 10 in electrical connection thereto, and operating the controller 1 with functions depending on the information stored in the memory 24 of the battery device.

To implement this, a computer program comprising computer program code is executed on the processor of the processing means 6 of the controller 1 to implement this method.

Preferred embodiments of a battery device according to the invention have been described together with a controller with which the battery device is to be used. It will be appreciated that the described embodiments may be varied within the scope defined by the appended claims without departing from the inventive idea.

## Claims

1. A battery device (10) comprising
- a housing (50) attached to a controller (1) for operating a crane , wherein the controller (1) is to be powered by the battery device,
- a battery cell (40), and
- electronic circuitry (20) connected to the battery cell (40) and electrically connectable to the controller (1), wherein the electronic circuitry comprises a memory (24),
wherein
- a function of the controller (1) depends on the information in the memory (24), **characterized in that** the function of the controller (1) is to operate in one of a plurality of operating modes,
- wherein the operating modes comprise any of the following: an operation mode for controlling the operation of a crane (100), a simulation mode for communicating with a simulation device (200) for simulating a crane, and a demonstration mode for demonstration of the different functions of the controller (1) for controlling a crane.

2. The battery device (10) according to claim 1, wherein the memory (24) comprises a read/write memory (28).

3. The battery device (10) according to claim 1 or 2, comprising a processor (22) connected to the memory (24).

4. The battery device (10) according to any one of claims 1-3, wherein the memory (24) is a serial memory (28).

5. A battery device (10) according to any one of claims 1-4, wherein the function of the controller relates to user data, preferably authorization levels and/or identification information.

6. A controller (1) for controlling the operation of a crane (100), comprising:
- a control panel (3) for the control of different functions of the crane (100),
- a processing means (6) connected to the control panel (3) and adapted to control the function of the controller (1), and
- a detachable battery device for powering the controller (1),
**characterized in that**
the battery device is a battery device (10) according to any of claims 1-5.

7. A method of operating a controller (1) for controlling the operation of a crane (100) by means of a controller (1) powered by a battery device (10) according to any one of claims 1-5, the method comprising the following steps:
a) storing, in a memory (24) of the battery device (10), information on which a function of the controller (1) depends,
b) attaching the battery device (10) to the controller (10) in electrical connection thereto, and
c) operating the controller (1) with functions depending on the information stored in the memory (24) of the battery device, **characterized in that** operating modes comprise any of the following: an operation mode for controlling the operation of the crane (100), a simulation mode for communicating with a simulation device (200) for simulating a crane, and a demonstration mode for demonstration of the different functions of the controller (1) for controlling a crane.

8. A computer program comprising computer program code, the computer program code being adapted, if executed on a processor of the processing means (6) of a controller according to claim 6, to implement the method according claim 7.

9. A computer program product comprising a computer readable storage medium (7), the computer readable storage medium having the computer program according to claim 8.

## Patentansprüche

1. Batterievorrichtung (10), umfassend
- ein Gehäuse (50), das an einer Steuerung (1) zum Betrieb eines Krans angebracht ist, wobei die Steuerung (1) von der Batterievorrichtung mit Strom versorgt werden soll,
- eine Batteriezelle (40), und
- elektronische Schaltung (20), die mit der Batteriezelle (40) verbunden und elektrisch mit der Steuerung (1) verbindbar ist, wobei die elektronische Schaltung einen Speicher (24) umfasst,
wobei
- eine Funktion der Steuerung (1) von den Informationen in dem Speicher (24) abhängt, **dadurch gekennzeichnet, dass** die Funktion der Steuerung (1) darin besteht, in einem von einer Vielzahl von Betriebsmodi zu arbeiten,
- wobei die Betriebsarten eine der folgenden umfassen: einen Betriebsmodus zur Steuerung des Betriebs eines Krans (100), einen Simulationsmodus zur Kommunikation mit einer Simulationsvorrichtung (200) zur Simulation eines Krans und einen Demonstrationsmodus zur Demonstration der verschiedenen Funktionen der Steuerung (1) zur Steuerung eines Krans.

2. Batterievorrichtung (10) nach Anspruch 1, wobei der Speicher (24) einen Lese-/Schreibspeicher (28) umfasst.

3. Batterievorrichtung (10) nach Anspruch 1 oder 2, umfassend einen mit dem Speicher (24) verbundenen Prozessor (22).

4. Batterievorrichtung (10) nach einem der Ansprüche 1 bis 3, wobei der Speicher (24) ein serieller Speicher (28) ist.

5. Batterievorrichtung (10) nach einem der Ansprüche 1 bis 4, wobei sich die Funktion der Steuerung auf Benutzerdaten, vorzugsweise Berechtigungsebenen und/oder Identifikationsinformationen, bezieht.

6. Steuerung (1) zur Steuerung des Betriebs eines Krans (100), umfassend:
- ein Bedienpult (3) zur Steuerung verschiedener Funktionen des Krans (100),
- mit dem Bedienpult (3) verbundene und zur Steuerung der Funktion des Reglers (1) geeignete Verarbeitungsmittel (6), und
- eine abnehmbare Batterievorrichtung zur Stromversorgung der Steuerung (1),
**dadurch gekennzeichnet, dass**
die Batterievorrichtung eine Batterievorrichtung (10) nach einem der Ansprüche 1 bis 5 ist.

7. Verfahren zur Bedienung einer Steuerung (1) zur Steuerung des Betriebs eines Krans (100) durch eine von einer Batterievorrichtung (10) betriebene Steuerung (1) nach einem der Ansprüche 1 bis 5, das Verfahren umfassend folgende Schritte:
a) Speichern von Informationen in einem Speicher (24) der Batterievorrichtung (10), von der eine Funktion der Steuerung (1) abhängt,
b) Befestigen der Batterievorrichtung (10) an der Steuerung (10) in elektrischer Verbindung daran, und
c) Bedienen der Steuerung (1) mit Funktionen, die von den in dem Speicher (24) der Batterievorrichtung gespeicherten Informationen abhängen, **dadurch gekennzeichnet, dass** die Betriebsarten eines der Folgenden umfassen: einen Betriebsmodus zur Steuerung zum Betrieb des Krans (100), einen Simulationsmodus zur Kommunikation mit einer Simulationsvorrichtung (200) zur Simulation eines Krans und einen Demonstrationsmodus zur Demonstration der verschiedenen Funktionen der Steuerung (1) zur Steuerung eines Krans.

8. Computerprogramm, das Computerprogrammcode umfasst, wobei der Computerprogrammcode angepasst wird, wenn er auf einem Prozessor der Verarbeitungsmittel (6) einer Steuerung nach Anspruch 6 ausgeführt wird, das Verfahren nach Anspruch 7 umzusetzen.

9. Computerprogrammprodukt, das ein computerlesbares Speichermedium (7) umfasst, wobei das computerlesbare Speichermedium das Computerprogramm nach Anspruch 8 aufweist.

## Revendications

1. Dispositif (10) de batterie comprenant
- un boîtier (50) fixé à un dispositif de commande (1) pour faire fonctionner une grue, dans lequel le dispositif de commande (1) doit être alimenté en énergie par le dispositif de batterie,
- une cellule (40) de batterie, et
- une circuiterie électronique (20) connectée à la cellule (40) de batterie et pouvant être connectée électriquement au dispositif de commande (1), dans lequel la circuiterie électronique comprend une mémoire (24),
dans lequel
- une fonction du dispositif de commande (1) dépend des informations dans la mémoire (24), **caractérisé en ce que** la fonction du dispositif de commande (1) est de fonctionner dans l'un d'une pluralité de modes de fonctionnement,
- dans lequel les modes de fonctionnement comprennent l'un quelconque des modes suivants : un mode de fonctionnement pour commander le fonctionnement d'une grue (100), un mode de simulation pour communiquer avec un dispositif de simulation (200) pour simuler une grue, et un mode de démonstration pour faire une démonstration des différentes fonctions du dispositif de commande (1) pour commander une grue.

2. Dispositif (10) de batterie selon la revendication 1, dans lequel la mémoire (24) comprend une mémoire de lecture/écriture (28).

3. Dispositif (10) de batterie selon la revendication 1 ou la revendication 2, comprenant un processeur (22) connecté à la mémoire (24).

4. Dispositif (10) de batterie selon l'une quelconque des revendications 1 à 3, dans lequel la mémoire (24) est une mémoire série (28).

5. Dispositif (10) de batterie selon l'une quelconque des revendications 1 à 4, dans lequel la fonction du dispositif de commande concerne des données utilisateur, de préférence des niveaux d'autorisation et/ou des informations d'identification.

6. Dispositif de commande (1) pour commander le fonctionnement d'une grue (100), comprenant :
- un panneau de commande (3) pour la commande de différentes fonctions de la grue (100),
- des moyens de traitement (6) connectés au panneau de commande (3) et adaptés pour commander la fonction du dispositif de commande (1), et
- un dispositif de batterie amovible pour alimenter en énergie le dispositif de commande (1),
**caractérisé en ce que**
le dispositif de batterie est un dispositif (10) de batterie selon l'une quelconque des revendications 1 à 5.

7. Procédé de fonctionnement d'un dispositif de commande (1) pour commander le fonctionnement d'une grue (100) au moyen d'un dispositif de commande (1) alimenté en énergie par un dispositif (10) de batterie selon l'une quelconque des revendications 1 à 5, le procédé comprenant les étapes suivantes :
a) le stockage, dans une mémoire (24) du dispositif (10) de batterie, d'informations dont une fonction du dispositif de commande (1) dépend,
b) la fixation du dispositif (10) de batterie au dispositif de commande (10) en connexion électrique à celui-ci, et
c) le fonctionnement du dispositif de commande (1) avec des fonctions qui dépendent des informations stockées dans la mémoire (24) du dispositif de batterie, **caractérisé en ce que** des modes de fonctionnement comprennent l'un quelconque des modes suivants : un mode de fonctionnement pour commander le fonctionnement de la grue (100), un mode de simulation pour communiquer avec un dispositif de simulation (200) pour simuler une grue, et un mode de démonstration pour faire une démonstration des différentes fonctions du dispositif de commande (1) pour commander une grue.

8. Programme informatique comprenant un code de programme informatique, le code de programme informatique étant adapté, s'il est exécuté sur un processeur des moyens de traitement (6) d'un dispositif de commande selon la revendication 6, pour mettre en œuvre le procédé selon la revendication 7.

9. Produit de programme informatique comprenant un support de stockage (7) lisible par ordinateur, le support de stockage lisible par ordinateur ayant le programme informatique selon la revendication 8.
